# EUROPEAN PATENT APPLICATION

(11) **EP 4 650 928 A1**
(43) Date of publication of application: **19.11.2025**
(21) Application number: 24305752.8
(22) Date of filing: 15.05.2024
(51) Int. Cl.: G06F 3/0484, G06F 40/35

(54) **METHOD, DEVICE, AND COMPUTER PROGRAM FOR ASSISTING USERS TO MAKE DRAWINGS ON COMPUTERS**

(71) Applicant: Beink Dream, 91000 Évry-Courcouronnes (FR)
(72) Inventor: TEITGEN, Raphaël, 91000 Évry-Courcouronnes (FR); LE PEILLET, Jeanne, 91000 Évry-Courcouronnes (FR); HARB, Jeanine, 91000 Évry-Courcouronnes (FR)
(74) Representative: Casalonga

(57) **Abstract**

The present disclosure provides a method for assisting a user to make drawings, in a processing device. After having selected (305) at least one part of a current drawing and obtained (310) a textual description of a desired enhancement of the selected at least one part of the current drawing, at least one enhanced drawing is obtained (360) as a function of the selected at least one part of the current drawing and of the obtained textual description of the desired enhancement and at least one part of the obtained at least one enhanced drawing is provided (365) as the current drawing. The steps of selecting at least one part of a current drawing, obtaining a textual description, and obtaining at least one enhanced drawing are repeated at least once.

## Description

### FIELD OF THE DISCLOSURE

The present disclosure relates to computer-assisted drawings. Particularly, but not exclusively, the disclosure relates to computer-assisted iterative enhancement of drawings.

### BACKGROUND OF THE DISCLOSURE

There are many computer-aided drafting applications, including artistic and industrial drawing applications. For aesthetic drawing applications, a user chooses a drawing tool, e.g. a pencil or brush, as well as a rendering style, e.g. charcoal, watercolour or oil paint, a colour, etc. Then, using a touch screen, a mouse, a trackpad, or any other input device, he or she draws what he or she wants on the screen. Other tools, such as selection and eraser tools, can be used to modify the drawings.

Such tools enable a user to give free rein to his or her imagination and realize whatever he or she wishes, in different variations, etc. There are also collaborative tools that enable several people to work on the same work.

Although these applications are highly operational, they require a certain amount of creativity on the part of the users to achieve the desired results. This makes them more difficult to access for those lacking in creativity.

There is therefore a need for drawing applications to assist users in the creation of drawings.

The present disclosure has been devised to address one or more of the foregoing concerns.

### SUMMARY OF THE DISCLOSURE

It is a broad aspect of the present disclosure to provide a method, a device, and a computer program for assisting users to make drawings on computers.

According to an aspect of the disclosure there is provided a method for assisting a user to make drawings, in a processing device, the method comprising:
selecting at least one part of a current drawing;
obtaining a textual description of a desired enhancement of the selected at least one part of the current drawing;
obtaining at least one enhanced drawing as a function of the selected at least one part of the current drawing and of the obtained textual description of the desired enhancement and providing at least one part of the obtained at least one enhanced drawing as the current drawing; and
repeating at least once the steps of selecting at least one part of a current drawing, obtaining a textual description, and obtaining at least one enhanced drawing.

Accordingly, the method of the disclosure makes it possible for a user to make quickly drawings corresponding to his or her needs, in particular in terms of content, quality, and style, even if he or she is not a good draughtsman or lacks creativity.

In an embodiment, the further comprises obtaining an initial drawing, the initial drawing being the current drawing of which at least one part is selected.

Still in an embodiment, the method further comprises enhancing, by the user, the current drawing, thereby providing several means for a user to enhance drawings.

Still in an embodiment, the method further comprises determining characteristics of a content of the current drawing, the at least one enhanced drawing being further generated as a function of the determined characteristics, making it possible to obtain quickly a drawing corresponding to particular needs.

Still in an embodiment, the method further comprises enhancing the obtained textual description as a function of the determined characteristics.

Still in an embodiment, obtaining at least one enhanced drawing comprises obtaining a set of a plurality of enhanced drawings, the method further comprising selecting one enhanced drawing of the set, at least one part of the selected enhanced drawing being provided as the current drawing.

Still in an embodiment, the method further comprises obtaining a characteristic of the enhanced image to be generated, the at least one enhanced drawing being further generated as a function of the obtained characteristic.

Still in an embodiment, the obtained characteristic of the enhanced image is a style of drawing.

Still in an embodiment, the method further comprises translating the textual description, the at least one enhanced drawing being further generated as a function of the translated textual description.

Still in an embodiment, the enhanced drawing is obtained using a generative Al model.

Still in an embodiment, the method further comprises identifying and loading a fine-tuning setting of the generative Al model, the fine-tuning setting being identified as a function of the obtained characteristic.

Still in an embodiment, the method further comprises detecting edges in the selected at least one part of the current drawing, the enhanced drawing being generated as a function of the detected edges.

Still in an embodiment, the method further comprises generating the at least one obtained enhanced drawing.

At least parts of the method according to the disclosure may be computer implemented. Accordingly, the present disclosure may take the form of an entirely hardware embodiment, an entirely software embodiment (including firmware, resident software, micro-code, etc.) or an embodiment combining software and hardware aspects that may all generally be referred to herein as a "circuit", "module" or "system". Furthermore, the present disclosure may take the form of a computer program product embodied in any tangible medium of expression having computer usable program code embodied in the medium.

Since the present disclosure can be implemented in software, the present disclosure can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

### BRIEF DESCRIPTION OF THE DRAWINGS

Embodiments of the disclosure will now be described, by way of example only, and with reference to the following drawings in which:
**Figure 1** illustrates schematically a data processing system, wherein some embodiments of the disclosure may be carried out;
**Figure 2** illustrates an example of a graphical user interface that makes it possible for a user to interact with a data processing system, according to some embodiments of the disclosure;
**Figure 3** is a flow chart illustrating an example of steps of a method for assisting a user to iteratively enhancing drawings, according to some embodiments of the disclosure;
**Figures 4 to 9** illustrate an example of a graphical user interface in different states corresponding to some of the steps illustrated in Figure 3, according to some embodiments of the disclosure; and
**Figure 10** schematically illustrates a processing device configured to implement at least one embodiment of the present disclosure.

### DETAILED DESCRIPTION OF THE DISCLOSURE

According to particular embodiments, the disclosure is directed to a method, a device, and a computer program for assisting a user to iteratively enhance a drawing, by providing to the user the possibility to iteratively generate Artificial Intelligence (Al) generated drawings on the basis of a previously obtained drawing, on prompts making it possible to determine the needs of the user in view of a selected drawing, and/or on other characteristics such as a drawing style or reference images. Such a solution makes it possible to drive a user toward an iteratively enhanced drawing from an initial drawing and textual indications.

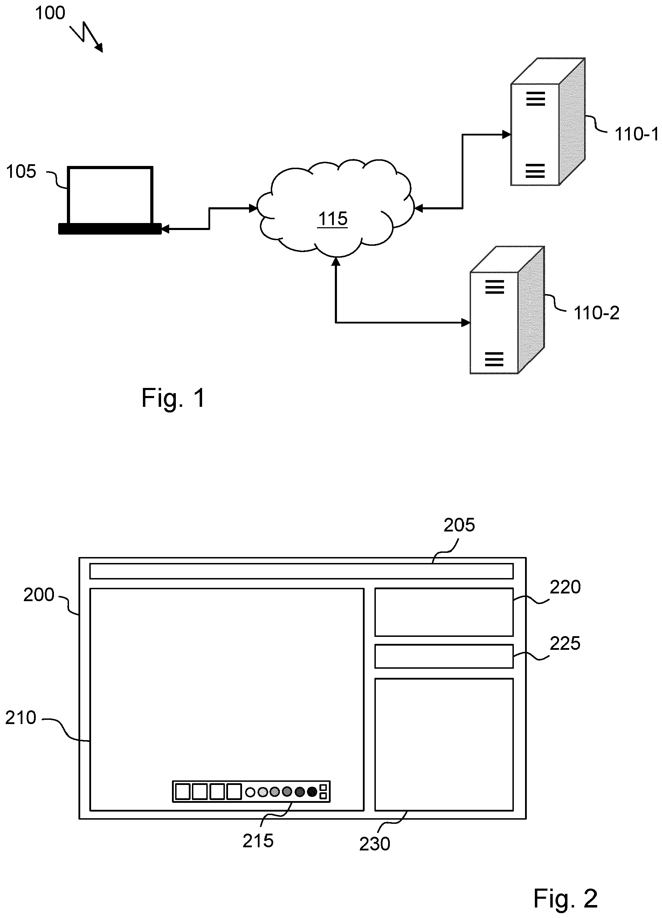

**Figure 1** illustrates schematically a data processing system, wherein some embodiments of the disclosure may be implemented.

According to the illustrated example, the data processing system 100 comprises a personal device 105 such as a personal computer, a tablet, or a smartphone and one or more servers, for example servers 110-1 and 110-2 that may exchange data with personal device 105 through communication network 115. Data exchange may use standard communication protocols such as TCP (Transmission Control Protocol) and UDP (User Datagram Protocol).

Servers 110-1 and/or 110-2 are offering known services for generating drawings from prompts or from images and prompts. Such services may be based on generative AI applications such as those known as Midjourney, Dall-E, and Stable Diffusion AI (Midjourney, Dall-E, and Stable Diffusion are trademarks). For the sake of illustration, Stable Diffusion AI is a latent diffusion model for generating AI images, based on neural networks, that can be photorealistic or in an artistic style. From a prompt that describes an awaited image, Stable Diffusion AI creates one or more corresponding images, according to a text-to-image generation service. Stable Diffusion AI may also create one or more images from an initial image and from a prompt, according to an image-to-image generation service, for example one or more images having a different style than the initial one from which they are generated.

To that end, personal device 105 comprises a graphical user interface making it possible for a user to interact with the data processing system 200. In addition and according to some embodiments, personal device 105 comprises one or more modules, for example software modules, to assist a user to iteratively enhance a drawing. As described hereafter, such modules may comprise some or all of the following modules:
- a module for enabling a user to draw on a screen of his or her personal device and/or to select drawings or portions of drawings,
- a module for analysing a drawing and for providing characteristics of the drawing (also referred to as generating descriptors),
- a module for translating a text, for example a prompt, from a first language into another language,
- a module for improving a prompt,
- a module for detecting edges in a drawing,
- a module for generating an enhanced prompt,
- a module for capturing the context of an image for inclusion in a generated image,
- etc.

It is to be noted that such modules may be independent or pseudo-independent modules or may be grouped in one or more modules.

According to some other embodiments, personal device 105 is mainly used as an interface, the steps of iteratively generating drawings being carried out remotely, for example in a remote server communicatively linked to the personal device, for example via communication network 115. Such an interface may be a web interface.

Still according to some other embodiments, the personal device comprises a generative AI model for generating AI images. Accordingly, the personal device may be used independently.

**Figure 2** illustrates an example of a graphical user interface that makes it possible for a user to interact with a data processing system, according to some embodiments of the disclosure. Such a graphical user interface may be accessible on a personal device like personal device 105 in Figure 1.

As illustrated, the graphical user interface 200 comprises a menu bar 205 and several areas for displaying and/or entering data such as text and drawings. Menu bar 205 may provide access to standard functions, for example for opening and/or saving files, for copying and pasting data, for selecting tools and/or colours, for launching particular functions, etc.

According to the illustrated example, editing area 210 makes it possible for a user to make drawings, to select a drawing or a portion of drawing, to display a drawing stored in the personal device or in a remote device, and/or to copy a drawing or a portion of a drawing displayed in another part of the screen (e.g., an enhanced drawing resulting from a generative AI model). To that end, some tools are available, for example as a movable and displayable/hideable tool panel 215. Such a set of drawing tools may comprise a pencil, a brush, an eraser, pencil and brush sizes, colours, a selection tool, predetermined selection shapes, etc.

Still for the sake of illustration, graphical user interface 200 comprises text editing area 220, for inputting text, for example for inputting a prompt describing the enhanced drawing the user wishes to obtain. According to some embodiments, the text may be entered in a predetermined language or in one of several predetermined languages. According to some other embodiments, the text may be entered in any (or almost any) languages.

Still according to the illustrated example, graphical user interface 200 further comprises area 225 enabling a user to enter additional characteristics of the drawings to be obtained (i.e., the enhanced drawing), such as a style. Area 225 may be a text editing area or a list of selectable items.

Using a drawing selected in editing area 210, a prompt entered in area 220, and possibly additional characteristics entered in area 225, one or more enhanced drawings may be generated by a generative AI model and displayed in display area 230. The number of generated drawings may be set as a parameter, for example in a setting function accessible via the menu bar. Enhanced drawings may be generated automatically as soon as a drawing is selected in editing area 210, a prompt is entered in area 220, and additional characteristics are entered in area 225 or upon a user request, for example by clicking on a dedicated button (not represented) of the graphical user interface or via a particular menu.

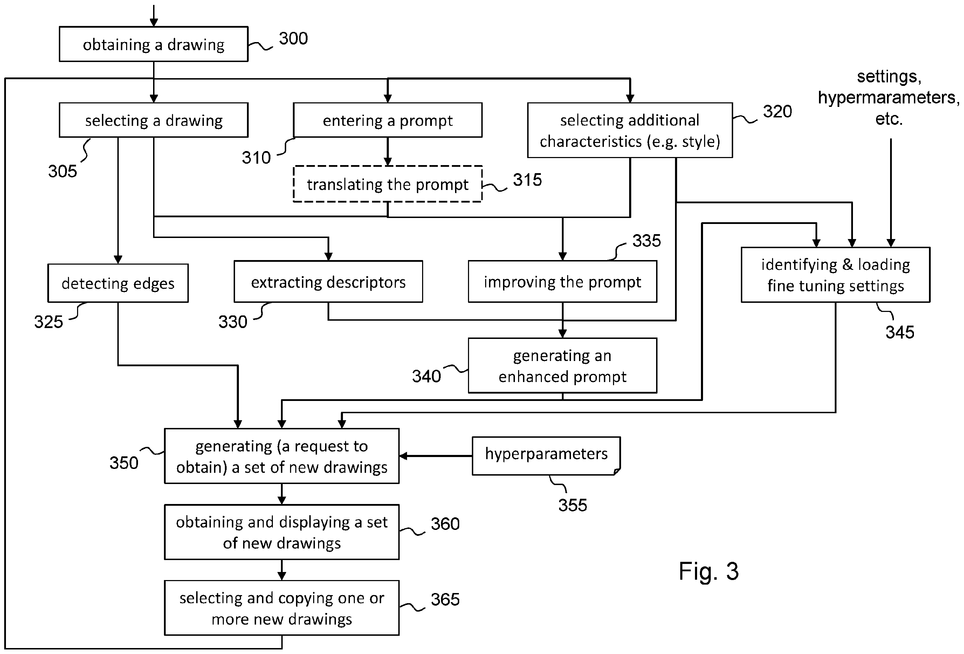

**Figure 3** is a flow chart illustrating an example of steps of a method for assisting a user to iteratively enhance drawings, according to some embodiments of the disclosure. The steps illustrate in Figure 3 may be carried out in a personal device such as personal device 105 in Figure 1.

As illustrated, a first step is directed to obtaining a drawing (step 300). According to some embodiments, obtaining a drawing mainly comprises making a drawing, for example making a drawing in editing area editing 210 in Figure 2, using standard drawing tools. According to some other embodiments, obtaining a drawing mainly comprises accessing a drawing stored in a file, for example in a personal device carrying out the steps illustrated in Figure 3 or in a remote device, and displaying the accessed drawing, for example in editing area 210 in Figure 2. Still according to some embodiments, the accessed and displayed drawing may be modified by the user.

Next, the user may select the drawing or a part of the drawing (step 305) that is to be used for generating one or more enhanced drawings. For the sake of illustration, the selection may be carried out by drawing a line around the area to be selected, for example using a predetermined shape. The selected drawing or portion of the drawing is referred to as the current drawing.

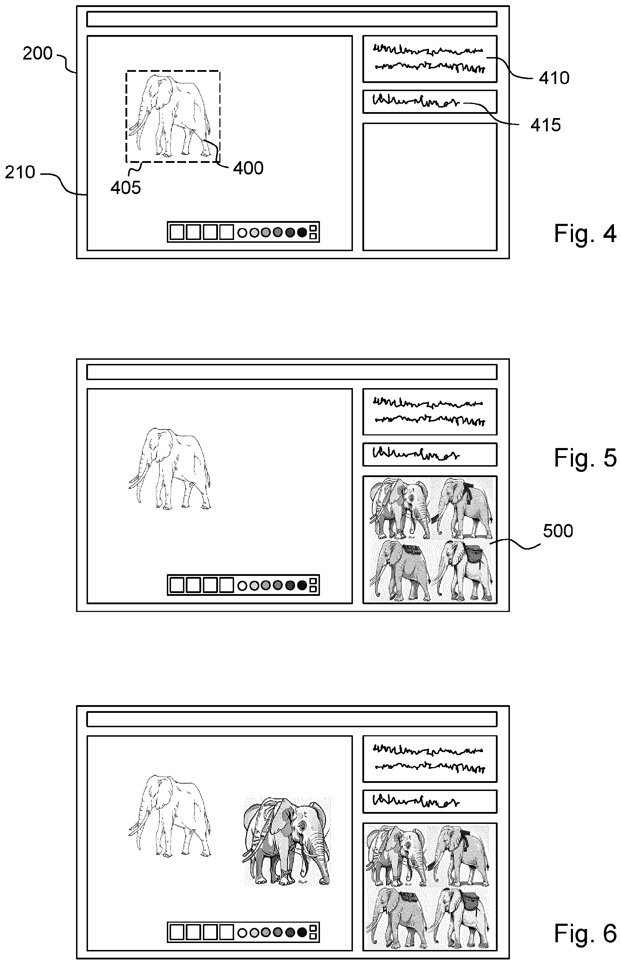

Next, before, or in parallel, the user enters a prompt to describe the enhanced drawing to be obtained (step 310). The prompt should describe the enhanced drawing in as much detail as possible. It should include powerful keywords. As described above, the prompt may be entered in a predetermined language that can be directly processed by the data processing system, for example in English, or in one of several predetermined languages that can be directly processed by the data processing system. According to some embodiments, the data processing system uses a single language to process the prompts, for example English, and thus, if a prompt is not entered in this language, it is translated into it (step 315). Recognizing the language of the entered prompt and translating it into the language used by the data processing system may be done using standard tools such as Deepl, Reverso, and Babylon (Deepl, Reverso, and Babylon are trademarks). An example of prompt is provided by reference to Figure 4.

Next, before, or in parallel, the user enters or selects characteristics of the enhanced drawings to be generated (step 320), like a drawing style, a resolution, an inspiration of an image (i.e., a visual element featuring colours, textures, and/or patterns used to enhance and guide image generation towards a particular style of output), etc. Such characteristics may be entered by the user as text, images, numbers, Boolean values, etc. or may be selected in a list of items.

While the current drawing may be used to generate enhanced drawings, using only the edges of the current drawing makes it possible to make the process lighter without significantly decreasing the quality of the results. Accordingly, an edge detection algorithm may be applied (step 325) to the current drawing in order to obtain a binary drawing that may be used to generate enhanced drawings. For the sake of illustration, the edge detection algorithm may be the Canny edge detector.

After the user has entered data for generating enhanced drawings, one or more descriptors are extracted (step 330) from these data, in particular from the current drawing. Such descriptors may comprise information about the colours of the current drawing and about its content. Descriptors may be generated using the image selected by the user through a multimodal chatbot tailored for image description. A LLAVA (Large Language and Vision Assistant) is a descriptor model that encodes an image for use as an input field; this field may be augmented with additional information to guide the description, thereby refining the output data. The same descriptor model with the same image to describe may produce different results depending on the desired contextual orientation. Descriptor models may be standalone modules that provide additional information to a user's prompt. The descriptor model, the amount of description generated, or the contextual orientation are not necessarily fixed in the process of generating the enhanced prompt. According to some embodiments, the entered prompt (or translated prompt if the prompt has been translated) and/or the entered additional characteristics may also be used, preferably in conjunction with the current drawing, to generate descriptors. Examples of descriptors are provided by reference to Figure 4.

Likewise, after the user has entered data for generating enhanced drawings, the prompt (or the translated prompt) may be improved (step 335), for example by improving the choice of the keywords, by improving clarity, etc. As illustrated, the current drawing and/or the additional characteristics may be used to improve the prompt. Enhancing the prompt may be achieved in various ways, first by considering the user's desired style, such as a painting style, whether it be in black and white or color, the complexity level of the generated drawing, etc. The style generates keywords tailored to the prompt, that are added to guide the image generation. The prompt may also be enhanced based on the user's profile, habits, functions, etc., without necessarily specifying this to generate more suitable images. Descriptors generated by additional modules may also be used to strengthen the prompt by adding more contextual information about the user's drawing, thus refining the output result. Finally, certain general keywords can be added to the prompt to improve the overall quality of the generated image, in accordance with the generation model used.

Next, once the additional characteristics have been entered by the user (if any), an enhanced prompt may be generated (step 340). According to some embodiments, the enhanced prompt combines the prompt entered by the user or the improved prompt and the generated descriptors. It may also comprise information obtained from the additional characteristics entered by the user as well as elements from hyperparameters, as described herein below. Generating the enhanced prompt may be done by concatenating these items of information. An example of enhanced prompt is provided by reference to Figure 4.

In addition, once the additional characteristics have been entered by the user (if any), fine-tuning settings may be identified and loaded into the generative AI model used to generate the enhanced drawings (step 345). For the sake of illustration, fine-tuning settings may be LoRA (Low-Rank Adaptation) models, that are small Stable Diffusion models applying tiny changes to standard checkpoint models, to modify styles by applying small changes to the cross-attenuation layers (a LoRA cannot be used alone, it should be used in conjunction with a model checkpoint file) or IP-Adapters that are adapters to achieve image prompt capability for a pretrained text-to-image diffusion models. Existing LoRAs or IP-adapters may be used or created, a LoRA being identified as a function of the additional characteristics entered by the user. After a LoRA has been identified, it is loaded to be used.

Once the enhanced prompt has been generated, enhanced drawings may be generated (step 350) by a generative AI model such as Stable Diffusion or any other diffusion model, from the edges of the current drawing and from the enhanced prompt, using the identified and loaded fine-tuning settings (e.g., LoRA) and using hyperparameters 355. For the sake of illustration, the hyperparameters may comprise negative and positive prompts, corresponding for example to optimal configurations that has been identified empirically. They may also comprise parameters such as parameter values of the Canny edge detector, the size of the enhanced drawings, the number of enhanced drawings to generate, conditioning scale factors, etc., as well as parameters of the generative AI model such as controlnet weight for the selected diffusion models.

According to some embodiments, the generative AI model used to generate the enhanced drawings is embedded with the device carrying out the steps described by reference to Figure 3. Therefore, the enhanced drawings are directly generated from the edges of the current drawing and from the enhanced prompt by providing these data to the generative AI model. According to some other embodiments, the generative AI model used to generate the enhanced drawings is implemented in a remote device. In such a case, a request to obtain the enhanced drawings may be generated as a function of the edges of the current drawing, the enhanced prompt, the identified fine-tuning settings (e.g., LoRA), and the hyperparameters. This request is then transmitted to the device implementing the generative AI model to be used, that returns the generated enhanced drawings.

The obtained enhanced drawings are then displayed (step 360). For the sake of illustration, the obtained enhanced drawings are displayed in display area 230 of the graphical user interface 200 illustrated in Figure 2.

Then, the user may select one of the enhanced drawings, a portion of one of the enhanced drawings, or several of the enhanced drawings and copy the selection (step 365) so that the selected enhanced drawing may be used as a current drawing or may be modified in view of being used as a current drawing. For the sake of illustration, an enhanced drawing may be selected in the display area 230 in Figure 2 and copied in editing area 210. The process loops iteratively until the user obtains the drawing(s) he or she expects. This or these drawings may then be stored locally to be used later, may be printed, may be transmitted to one or several remote devices, for example to be stored and/or displayed, etc.

**Figures 4 to 9** illustrate an example of a graphical user interface in different states corresponding to some of the steps illustrated in Figure 3, according to some embodiments of the disclosure.

According to **Figure 4****,** a user has made or obtained and displayed an elephant 400 on an editing area of a graphical user interface, like editing area 210 of graphical user interface 200 in Figure 2. For the sake of illustration, the drawing here is a black- and-white pencil sketch. Other types of drawings may be used, for example greyscale or coloured drawings. The user has then selected the drawing using a rectangular selection shape that size correspond to the one of the drawing, as illustrated with reference 405. The selected drawing defines a current drawing to be used for generating enhanced drawings.

From the current drawing, one or more descriptors may be generated, as described by reference to step 330 in Figure 3. For example, the two following descriptors may be generated:
- *"The image is a black and white drawing of an elephant. The elephant is depicted with its trunk raised, giving the impression of a majestic and powerful creature. The drawing is likely a representation of an elephant in its natural habitat or a part of an educational material."* and
- *"The image features a large elephant standing on a white background. The elephant has a long trunk, which is visible on the left side of the image. The elephant's legs are spread apart, with the front legs on the left side and the hind legs on the right side. The elephant's head is positioned towards the top left corner of the image, and its ears are located on the top right side. The overall scene is a simple and clear representation of an elephant."*

According to some embodiments and as described with reference to step 325 in Figure 3, the edges are extracted from the current drawing, for example using the Canny edge detector.

In addition to the drawing, the user has entered a prompt 410 to describe the drawing he or she wishes to obtain. Still for the sake of illustration, such a prompt may be the following: *"an elephant with bags on its back and boots on its feet".* Since the prompt has been entered in English and assuming the working language of the processing system is English, there is no need to translate the prompt. However, it may be improved, for example transformed as "a *sketch of an elephant carrying a green bag on its back and wearing red boots on its feet".* According to this example, it is also assumed that the user has entered a style as additional characteristics, for example the "sticker" style, as illustrated with reference 415. This styme may be used to identify and load a LoRA.

Using the prompt (or the improved prompt), the descriptors, the additional characteristics, and hyperparameters, an enhanced prompt may be generated, as described by reference to step 340 in Figure 3. Such an enhanced prompt may be the following: *"(sticker, stickers, cartoon, white background)+++,(an elephant with bags on its back and boots on its feet)*+++++*,( The image is a black and white drawing of an elephant. The elephant is depicted with its trunk raised, giving the impression of a majestic and powerful creature. The drawing is likely a representation of an elephant in its natural habitat or a part of an educational material., The image features a large elephant standing on a white background. The elephant has* a *long trunk, which is visible on the left side of the image. The elephant's legs are spread apart, with the front legs on the left side and the hind legs on the right side. The elephant's head is positioned towards the top left corner of the image, and its ears are located on the top right side. The overall scene is a simple and clear representation of an elephant.)*+*,,high quality, detailed, accurate, no blur, denoise(white background)*+++*,".* The first part of the prompt (*sticker, stickers, cartoon, white background*) comes from the additional characteristics (sticker). In this example, a LORA is used to generate stickers. Trigger words are employed to amplify the style intensity on the image. Following this, the user's prompt, *"an elephant with bags on its back and boots on its feet"* has been obtained and translated into English if it was not already in the original text. Next, two descriptors concatenated in parentheses are introduced; though originating from the same model, these descriptors differ as they are requested to provide distinct information about the image, thereby enhancing the direction of the generated image. The phrase *"high quality, detailed, accurate, no blur, denoise"* represents general keywords, that may be consistently used, to attempt a global enhancement of the generated image. The term *"white background'* may be used to minimize the generation of superfluous background details, focusing solely on the user's drawing. The provided information is not fixed; for instance, one might choose to omit or add descriptors to bolster the image quality, and overall enhancements may also be adjusted. It is also noted that there is no style in the image but a LORA; hence, it may be envisioned that the user may opt out of using LORAs and choose a style where only style-related keywords are added to the prompt. Finally, the presence of parentheses followed by a "+" sign (which can also be decimal values) allows for adjusting the weight of different components of the prompt. For example, content within parentheses followed by two "+" signs will have more weight in the prompt than content with a single "+". Contents without parentheses carry a neutral weight in the prompt.

The second part of the enhanced prompt corresponds to the prompt entered by the user (or the improved prompt) and the third part of the enhanced prompt corresponds to the descriptors. The last part of the enhanced prompt corresponds to some of the hyperparameters, the one that should be taken into consideration for generating the enhanced drawings.

After having loaded the fine-tuning settings (e.g., LoRA) in the generative AI model (e.g., the Stable Diffusion model) and input the enhanced prompt and the edges of the current drawing in the generative AI model, the latter generates enhanced drawings, for example the four enhanced drawings 500 in **Figure 5****.**

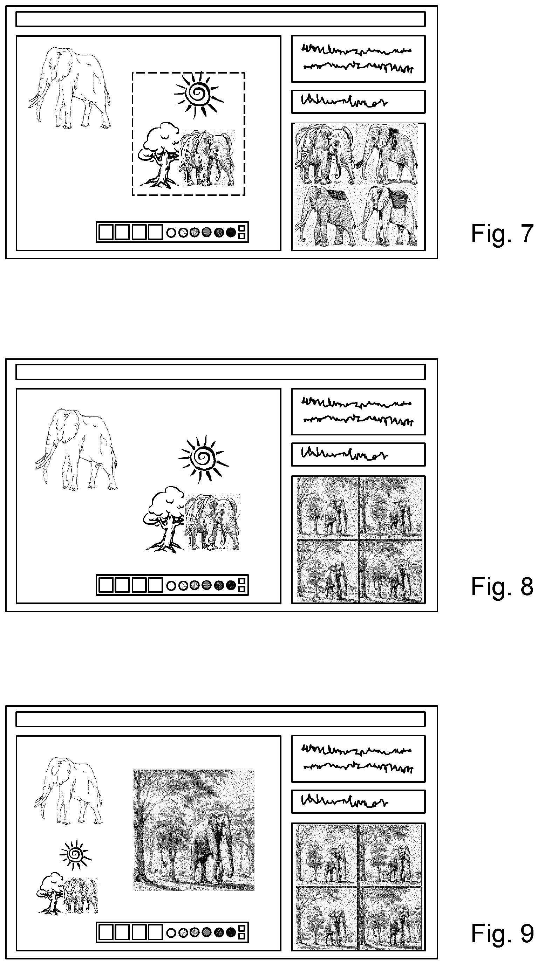

The user may then select one of them, for example the one on the top-left side of the set, and copy it on the editing area, as illustrated in **Figure 6****.** The drawing may be modified by the user, for example by adding some elements like a tree and the sun, as illustrated in **Figure 7****.** The user may then select the modified enhanced drawing to define a new current drawing. In addition to modifying the enhanced drawing, the user may refine the prompt, for example as follows: *"an elephant standing near a tree under the sun".* Next, using the new current drawing and a new enhanced prompt obtained from the new prompt, new enhanced images may be obtained, for example as illustrated in **Figure 8****.**

Again, the user may select one generated enhanced drawing, as illustrated in **Figure 9****,** to iteratively enhance an initial drawing with prompts and generated enhanced drawings. The number of iterations depends on whether or not the user is satisfied with the generated enhanced drawings.

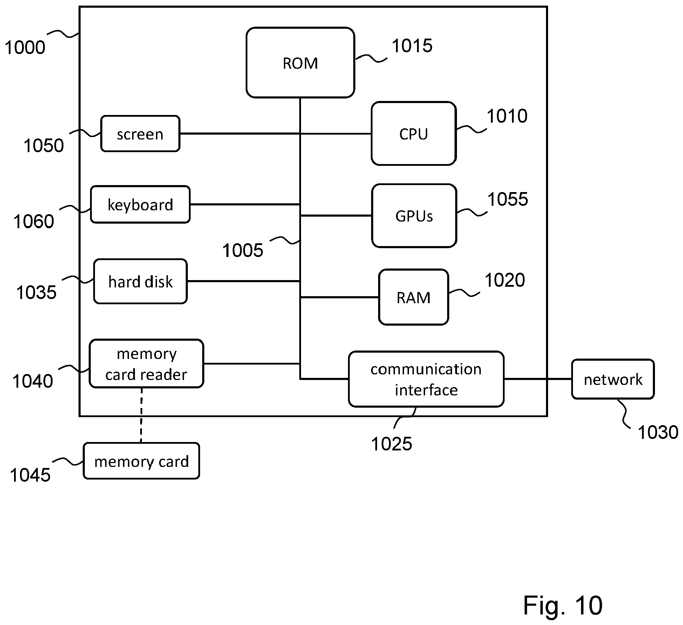

**Figure 10** schematically illustrates a processing device 1000 configured to implement at least one embodiment of the present disclosure, in particular some or all of the steps described by reference to Figure 3. The processing device 1000 may be a device such as a personal computer, a tablet, a smartphone, or a workstation. The device 1000 comprises a communication bus 1005 connected to:
- a central processing unit 1010, such as a microprocessor, denoted CPU;
- a set of Graphics Processing Unit (GPUs) 1055 for carrying out AI computation;
- a read only memory 1015, denoted ROM, for storing computer programs for implementing at least some parts of the disclosure;
- a random access memory 1020, denoted RAM, for storing the executable code of the method of embodiments of the disclosure as well as the registers adapted to record variables and parameters necessary for implementing the method of encoding a sequence of digital images and/or the method of decoding a bitstream according to embodiments of the disclosure; and
- a communication interface 1025 connected to a communication network 1030 over which digital data to be processed are transmitted or received.

Optionally, the apparatus 1000 may also include the following components:
- a data storage means 1035 such as a hard disk, for storing computer programs for implementing methods of one or more embodiments of the disclosure and data used or produced during the implementation of one or more embodiments of the disclosure;
- a memory card reader 1040 for a memory card 1045, the memory card reader being adapted to read data from the memory card 1045 or to write data onto this memory card;
- a screen 1050 for displaying data and/or serving as a graphical interface with a user, by means of a keyboard 1060 and/or any other pointing means.

The communication bus provides communication and interoperability between the various elements included in the apparatus 1000 or connected to it. The representation of the bus is not limiting and in particular the central processing unit is operable to communicate instructions to any element of the apparatus 1000 directly or by means of another element of the apparatus 1000.

The memory card 1045 may be replaced by any information medium such as for example a compact disk (CD-ROM), rewritable or not, in general terms, by an information storage means that can be read by a computer or by a microprocessor, integrated or not into the apparatus, possibly removable and adapted to store one or more programs whose execution enables the method of encoding a sequence of digital images and/or the method of decoding a bitstream according to the disclosure to be implemented.

The executable code may be stored either in read only memory 1015, on the hard disk 1035 or on a removable digital medium such as for example a memory card 1045 as described previously. According to a variant, the executable code of the programs can be received by means of the communication network 1030, via the interface 1025, in order to be stored in one of the storage means of the apparatus 1000 before being executed, such as the hard disk 1035.

The central processing unit 1010 is adapted to control and direct the execution of the instructions or portions of software code of the program or programs according to the disclosure, instructions that are stored in one of the aforementioned storage means. On powering up, the program or programs that are stored in a non-volatile memory, for example on the hard disk 1035 or in the read only memory 1015, are transferred into the random access memory 1020, which then contains the executable code of the program or programs, as well as registers for storing the variables and parameters necessary for implementing the disclosure.

In this embodiment, the apparatus is a programmable apparatus which uses software to implement the disclosure. However, alternatively, the present disclosure may be implemented in hardware (for example, in the form of an Application Specific Integrated Circuit or ASIC).

Although the present disclosure has been described hereinabove with reference to specific embodiments, the present disclosure is not limited to the specific embodiments, and modifications will be apparent to a skilled person in the art which lie within the scope of the present disclosure.

Many further modifications and variations will suggest themselves to those versed in the art upon making reference to the foregoing illustrative embodiments, which are given by way of example only and which are not intended to limit the scope of the disclosure, that being determined solely by the appended claims. In particular the different features from different embodiments may be interchanged, where appropriate.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used.

## Claims

1. A method for assisting a user to make drawings, in a processing device, the method comprising:
selecting (305) at least one part of a current drawing;
obtaining (310) a textual description of a desired enhancement of the selected at least one part of the current drawing;
obtaining (360) at least one enhanced drawing as a function of the selected at least one part of the current drawing and of the obtained textual description of the desired enhancement and providing (365) at least one part of the obtained at least one enhanced drawing as the current drawing; and
repeating at least once the steps of selecting at least one part of a current drawing, obtaining a textual description, and obtaining at least one enhanced drawing.

2. The method according to claim 1, further comprising obtaining (300) an initial drawing, the initial drawing being the current drawing of which at least one part is selected.

3. The method of claim 1 or claim 2, further comprising enhancing, by the user, the current drawing.

4. The method of any one of claims 1 to 3, further comprising determining (330) characteristics of a content of the current drawing, the at least one enhanced drawing being further generated as a function of the determined characteristics.

5. The method of claim 4, further comprising enhancing the obtained textual description as a function of the determined characteristics.

6. The method of any one of claims 1 to 5, wherein obtaining at least one enhanced drawing comprises obtaining a set of a plurality of enhanced drawings, the method further comprising selecting one enhanced drawing of the set, at least one part of the selected enhanced drawing being provided as the current drawing.

7. The method of any one of claims 1 to 6, further comprising obtaining (320) a characteristic of the enhanced image to be generated, the at least one enhanced drawing being further generated as a function of the obtained characteristic.

8. The method of claims 7, wherein the obtained characteristic of the enhanced image is a style of drawing.

9. The method of any one of claims 1 to 8, further comprising translating (315) the textual description, the at least one enhanced drawing being further generated as a function of the translated textual description.

10. The method of any one of claims 1 to 8, wherein the enhanced drawing is obtained using a generative AI model.

11. The method of claim 10 depending on claim 6 or claim 7, further comprising identifying and loading a fine-tuning setting of the generative AI model, the fine-tuning setting being identified as a function of the obtained characteristic.

12. The method of any one of claims 1 to 11, further comprising detecting (325) edges in the selected at least one part of the current drawing, the enhanced drawing being generated as a function of the detected edges.

13. The method of any one of claims 1 to 12, further comprising generating (350) the at least one obtained enhanced drawing.

14. A computer program for a programmable apparatus, the computer program comprising a sequence of instructions for implementing each of the steps of the method according to any one of claims 1 to 13 when loaded into and executed by the programmable apparatus.

15. A device for assisting a user to make drawings, the device comprising a processing unit configured for carrying out each of the steps of the method according to any one of claims 1 to 13.
